# FASCICULE DE BREVET EUROPEEN

(11) **EP 2 326 801 B1**
(45) Date de publication et mention de la délivrance du brevet: **24.02.2016**
(21) Numéro de dépôt: 09787123.0
(22) Date de dépôt: 08.09.2009
(51) Int. Cl.: F01K 9/00, F28B 1/02, F28B 1/06, F28B 7/00, F01K 17/00, F01K 7/16

(54) **DISPOSITIF DE COGÉNÉRATION**
KRAFT-WÄRME VORRICHTUNG
COGENERATION DEVICE

(30) Priorité: 10.09.2008 FR 0804969
(43) Date de publication de la demande: 01.06.2011
(73) Titulaire: Suez Environnement, 75008 Paris (FR)
(72) Inventeur: DUONG, Frédéric, 66370 Pezilla-la-Rivière (FR)
(74) Mandataire: Cabinet Armengaud Aîné
(86) Numéro de dépôt international: PCT/IB2009/053905
(87) Numéro de publication internationale: WO 2010/029494

(56) Documents cités:
- WO-A-2005/119014
- WO-A-2008/002635
- BE-A3- 1 006 285
- DE-A1- 19 745 272
- US-A- 3 820 334
- US-A1- 2008 010 968
- FORGO L: "MOEGLICHKEITEN DER STEIGERUNG DER ELEKTRISCHEN LEISTUNGSFAEHIGKEIT VON HEIZKRAFTWERKEN WAEHREND WARMER JAHRESZEITEN", ENERGIETECHNIK, LEIPZIG, DE, vol. 21, no. 11, 1 novembre 1971 (1971-11-01), pages 510-513, XP000770138, ISSN: 0013-7421

## Description

La présente invention est relative à un dispositif de production de chaleur par cogénération comprenant une source chaude, une turbine à vapeur et un condenseur situé à l'échappement de la turbine.

La cogénération consiste à produire simultanément de l'électricité et de la chaleur à partir d'une turbine à vapeur, d'une turbine à gaz ou d'un moteur thermique.

Sur une turbine à vapeur, la chaleur peut être extraite sous forme de vapeur, prélevée par soutirage entre deux rangées d'ailettes du rotor à une pression qui permet d'alimenter un échangeur de chaleur vapeur-eau. La position du soutirage de vapeur sur le corps d'une turbine permet de prélever une certaine quantité de vapeur à un niveau de pression variable selon l'utilisation de la vapeur. La chaleur produite par l'échangeur vapeur-eau est ensuite utilisée directement ou indirectement pour le chauffage de locaux ou des applications industrielles diverses.

La vapeur prélevée au niveau d'un soutirage turbine réduit la production d'électricité sur la fraction de vapeur qui ne sort pas par l'échappement de la turbine à la pression proche du vide. La perte de production électrique dépend du débit et de la pression de soutirage.

En sortie de la turbine, le condenseur de vapeur est utilisé pour transformer la vapeur de la phase gazeuse en phase liquide (condensat), et permettre le bouclage du cycle fermé de transformation d'énergie en renvoyant les condensats vers la source chaude.

Les condenseurs de vapeur sont des échangeurs thermiques utilisés pour condenser la vapeur d'eau sous forme de gaz H₂O en eau liquide. On rappelle qu'au cours de la condensation de la vapeur d'eau, la chaleur latente de transformation de la phase gazeuse en phase liquide libère une énergie importante, appelée chaleur latente de condensation. Ce phénomène de condensation est réversible, le pendant est l'évaporation de l'eau. Les condenseurs vapeur/eau sont des échangeurs de chaleur largement utilisés dans le domaine du chauffage statique ou dynamique

Dans les applications de la thermodynamique, les condenseurs constituent la source "froide" du cycle fermé. On distingue plusieurs types de condenseurs.

L'aérocondenseur est un condenseur qui utilise comme fluide de refroidissement l'air ambiant ou un gaz. L'air traverse des corps d'échange comportant des ailettes et le flux d'air est mécanique. Les aérocondenseurs fonctionnent dans une gamme de pression très légèrement positive et souvent négative par rapport à la pression atmosphérique.

L'hydrocondenseur est un condenseur qui utilise comme fluide de refroidissement l'eau ou une solution liquide. Ces appareils sont utilisés dans les centrales thermiques, leur capacité d'échange thermique élevée permettant d'améliorer les performances du cycle thermodynamique. L'eau traverse un échangeur à surface tubulaire ou à plaques.

Le condenseur est dimensionné et paramétré afin de permettre la condensation de la totalité de la vapeur issue de la turbine ou de la détente désurchauffée de la vapeur produite par un générateur de vapeur. Le fluide de refroidissement du condenseur emporte, sous forme de chaleur, une importante quantité d'énergie qui est dissipée dans le milieu naturel (air ou eau) et de ce fait perdue. En général l'énergie dissipée par le condenseur représente environ 50% de l'énergie primaire consommée.

WO 2005/119014 concerne une installation pour produire conjointement de l'énergie électrique et de la chaleur, par exemple pour chauffer des serres. La vapeur sortant de l'étage basse pression d'une turbine est dirigée pour partie vers un aérocondenseur, et pour l'autre partie vers un hydocondenseur. La disposition des différentes unités demande à être améliorée tant pour la récupération d'énergie que pour l'occupation de l'espace.

L'invention à pour but, surtout, d'utiliser au mieux tout ou partie de la chaleur non exploitée, emportée par le fluide de refroidissement du condenseur, afin d'améliorer substantiellement le rendement énergétique global, dans un espace réduit.

Selon l'invention, un dispositif d'amélioration de production de chaleur par cogénération comprenant une source chaude produisant de la vapeur qui est détendue dans une turbine dont l'échappement est relié à un aérocondenseur qui évacue de la chaleur, et comprenant au moins un second condenseur auxiliaire sous forme d'un hydrocondenseur, le liquide de refroidissement de cet hydrocondenseur étant dirigé vers une installation ou équipement dans lequel sa chaleur est extraite et utilisée, puis le liquide est renvoyé à l'hydrocondenseur, est caractérisé en ce que l'hydrocondenseur est intégré dans l'aérocondenseur.

La chaleur perdue par le premier condenseur est ainsi réduite, puisque tout ou partie de la vapeur est condensée dans le second condenseur qui permet de récupérer de la chaleur, ceci sans pour autant réduire la production d'électricité comme le ferait un soutirage de vapeur situé en amont de l'échappement de la turbine. L'intégration de l'hydrocondenseur dans l'aérocondenseur amélioré la récupération d'énergie dans un espace réduit.

Avantageusement, l'hydrococondenseur est intégré dans le plénum de distribution de vapeur de l'aérocondenseur.

Alternativement, et ne formant pas partie de l'invention, l'hydrocondenseur peut être monté en série ou en parallèle avec l'aérocondenseur.

Alternativement, et ne formant pas partie de l'invention, la conduite de liaison située entre l'échappement de la turbine et le premier condenseur peut être équipée d'un système de condensation intégré sur la conduite constituant le second condenseur auxiliaire.

D'autres caractéristiques et avantages de l'invention apparaîtront dans la description qui suit d'exemples de réalisation avec référence aux dessins annexés mais qui n'ont aucun caractère limitatif. Sur ces dessins :
Fig. 1 est un schéma du cycle de fonctionnement d'un dispositif de production d'énergie par cogénération qui n'est pas partie de l'invention.
Fig. 2 est un détail de Fig. 1 représentant un autre mode d'installation en série des condenseurs, et
Fig. 3 est un schéma similaire à Fig. 2 représentant, selon l'invention, un hydrocondenseur directement intégré dans un aérocondenseur.

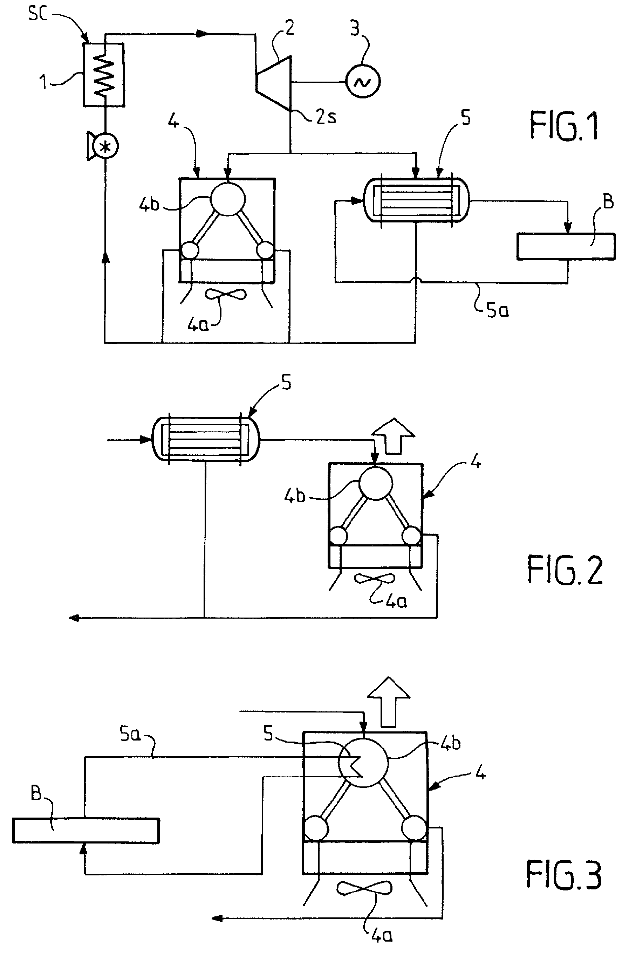

On peut voir Fig. 1 un schéma du cycle de fonctionnement d'un dispositif de production d'énergie par cogénération.

Une chaudière 1, constituant une source chaude SC, permet l'apport de chaleur au cycle. L'eau présente dans le circuit est vaporisée lors de son passage dans la chaudière 1.

La sortie de la chaudière 1 est reliée à l'entrée d'une turbine 2 dans laquelle la vapeur d'eau se détend. La turbine 2 est couplée à un alternateur 3 permettant la production d'électricité.

En sortie 2s de la turbine 3, selon l'invention, un premier condenseur 4 et un second condenseur 5, à savoir un hydrocondenseur, distincts sont positionnés, en parallèle selon Fig.1, pour condenser la vapeur à l'échappement de la turbine 2.

Le premier condenseur 4, dans l'exemple illustré, est un aérocondenseur. Un flux d'air de refroidissement vertical ascendant est mis en mouvement par une soufflante 4a disposée sous l'aérocondenseur. La chaleur latente de condensation dégagée lors de la condensation de la vapeur dans l'aérocondenseur 4 est dissipée et perdue dans l'atmosphère sous forme d'air chaud.

L'hydrocondenseur 5 comporte un circuit secondaire de refroidissement 5a par eau liquide. Le circuit de refroidissement 5a permet de récupérer la chaleur latente dégagée lors de la condensation de la vapeur d'eau. L'eau réchauffée du circuit secondaire 5a est dirigée vers un équipement ou une installation B afin d'y céder sa chaleur pour des applications externes telles que, notamment, le chauffage de locaux ou de serres de maraîchage ou horticoles ou tous autres usages thermiques. L'eau refroidie sortant de l'installation B retourne à l'entrée de l'hydrocondenseur 5.

En sortie des condenseurs 4 et 5, le circuit d'eau condensée est bouclé vers la chaudière 1 par l'intermédiaire de pompes et de réservoirs.

Afin de maintenir la pression de vapeur souhaitée à la sortie 2s de la turbine 2, un système de modulation (non représenté) de débit d'air des cellules de l'aérocondenseur 4 ou du débit d'eau dans l'hydrocondenseur 5 est prévu et piloté automatiquement.

Le niveau de température du circuit secondaire 5a de l'hydrocondenseur 5 est directement assujetti à la pression de vapeur en sortie de la turbine 2.

Dans certaines conditions particulières (par exemple : période de froid intense) le niveau de pression de la vapeur en sortie de la turbine peu être augmenté pour élever légèrement la température du circuit secondaire. Dans ce cas la production d'électricité sera également légèrement réduite. L'aérocondenseur 4 est dimensionné pour assurer une condensation totale de la vapeur issue de la turbine 2 ou de la détente désurchauffée, en particulier même si l'hydrocondenseur auxiliaire ne fonctionne pas.

Plusieurs arrangements sont possibles pour les condenseurs.

Un branchement en série est illustré Fig. 2. L'hydrocondenseur 5, destiné à la récupération de chaleur, est situé en amont de l'aérocondenseur 4 assurant le maintien du vide relatif en sortie de la turbine. La pression de vapeur dans l'hydrocondenseur 5 est alors légèrement plus élevée que celle dans le condenseur 4. Cette disposition est intéressante lorsque la quantité de chaleur prélevée est constante, auquel cas le condenseur secondaire peut être réduit en capacité thermique.

On peut aussi prévoir un branchement en parallèle comme dans l'exemple illustré Fig. 1 où les condenseurs 4, 5 sont positionnés sur des circuits séparés issus de la conduite d'échappement de la turbine 2. L'hydrocondenseur 5 fonctionne au même régime de pression et de température que l'aérocondenseur 4.

Un mode de réalisation avantageux, illustré Fig. 3, consiste selon l'invention en ce que l'hydrocondenseur 5 est intégré physiquement dans l'aérocondenseur 4, de préférence dans le plénum 4b (ou enveloppe cylindrique d'axe horizontal, dont le diamètre peut dépasser deux mètres) de l'aérocondenseur 4. L'hydrocondenseur 5 est réalisé sous forme d'un faisceau de tubes, dans lequel circule l'eau de refroidissement, ce faisceau est logé dans l'aérocondenseur 4, en particulier dans le plénum 4b.

Les exemples ont été donnés avec un aérocondenseur 4 comme premier condenseur. Il est toutefois possible d'utiliser un hydrocondenseur comme premier condenseur, auquel cas, ne formant pas partie de l'invention, l'installation comporte deux hydrocondenseurs en parallèle. En variante, ne formant pas partie de l'invention, on peut prévoir un seul hydrocondenseur avec plusieurs sections étagées, distinctes, constituant les deux condenseurs 4 et 5.

On peut aussi prévoir un dispositif de condensation de la vapeur, constituant le second condenseur 5, et ne formant pas partie de l'invention, intégré dans la conduite de vapeur en sortie de turbine.

En fonctionnement le dispositif selon l'invention permet de récupérer tout ou partie de la chaleur latente de condensation de la vapeur à l'échappement de la turbine et de transférer cette chaleur à un circuit à liquide caloporteur à moyenne température. Ceci sans soutirer de vapeur en amont de la sortie de la turbine et donc sans diminuer la production d'électricité. La quantité de chaleur évacuée et perdue par le fluide de refroidissement du premier condenseur est diminuée, et le rendement énergétique global est amélioré.

De nombreuses utilisations de la chaleur extraite du second condenseur 5 sont possibles. On citera notamment l'alimentation d'un circuit d'eau chaude pour le chauffage résidentiel et tertiaire, le maraîchage, l'horticulture, la pisciculture.

Des applications thermiques industrielles peuvent également être envisagées telles que :
- un circuit d'eau chaude pour le séchage de boues de station d'épuration, de compost, de déchets, de bois et autres matières et matériaux,
- ou la création d'une chaleur d'appoint pour le préchauffage de fluide, d'eau ou d'air de combustion.

Une production de froid peut également être envisagée, notamment en été, à partir de groupes frigorifiques à absorption Li / Br alimentés en eau à moyenne température 45°C-80°C.

Le potentiel de récupération de chaleur d'un hydrocondenseur 5 par rapport à l'énergie entrant dans le système est variable selon le rendement de cycle thermodynamique de la centrale de production électrique.

L'invention s'applique particulièrement à des systèmes EfW (energy from waste) de production d'énergie à partir de déchets, dont la puissance est généralement comprise entre 20 et 200 MW thermique. Dans de tels systèmes, par conception, la température d'échappement de vapeur sous vide en sortie de turbine est de 45°C à 60°C et donc utilisable par des consommateurs de chaleur relativement proches.

Par ailleurs, un avantage indirect de l'utilisation d'un hydrocondenseur est la réduction de la consommation d'électricité des aérocondenseurs dont la puissance électrique, pour assurer une circulation d'air suffisante, est plus élevée que celle de la pompe de circulation d'eau dans l'ydrocondenseur auxiliaire.

L'impact énergétique, économique et environnemental de l'utilisation, selon l'invention, de cette ressource de chaleur, qui est perdue par de nombreuses unités de production d'électricité, est considérable.

La chaleur, qui était ainsi perdue et qui peut être appelée « chaleur fatale », varie dans une fourchette de 40 % à 55 % de l'énergie produite par la combustion en entrée.

Dans le cas de centrales thermiques à haut rendement, de puissance élevée, le niveau de température de la chaleur fatale dissipée dans un hydrocondenseur est relativement bas, de l'ordre de 30°C à 35°, de sorte que cette chaleur perdue est plus difficilement techniquement et économiquement exploitable pour un usage thermique courant.

Compte tenu de l'impact économique d'une baisse de la production électrique qui serait liée à pression et à la température de la vapeur en sortie de la turbine. Dans les centrales thermiques de grosse puissance il n'est pas envisageable de moduler la pression de la vapeur en sortie turbine selon les besoins des utilisateurs potentiels de chaleur d'une taille infime par rapport au potentiel de chaleur dissipée par la centrale thermique.

Une autre raison quasi rédhibitoire de la difficulté d'augmenter la température du circuit d'eau de refroidissement des hydrocondenseurs est soit une limitation réglementaire de la température de l'eau dans le milieu naturel pour les systèmes de refroidissement en boucle ouverte (rivière et mer), soit une limitation de la température de distribution d'eau dans les aéroréfrigérants atmosphériques pour les circuits en boucle semi fermés (pb de dilatation et de sécurité)

La taille modeste des EfW (energy from waste) est propice à l'utilisation de la chaleur fatale disponible au condenseur auxiliaire.

## Revendications

1. Dispositif d'amélioration de production de chaleur par cogénération comprenant une source chaude (SC) produisant de la vapeur qui est détendue dans une turbine (2) dont l'échappement est relié à un aérocondenseur (4) qui évacue de la chaleur, et comprenant au moins un second condenseur auxiliaire (5) sous forme d'un hydrocondenseur, le liquide de refroidissement de cet hydrocondenseur (5) étant dirigé vers une installation ou équipement (B) dans lequel sa chaleur est extraite et utilisée, puis le liquide est renvoyé à l'hydrocondenseur, **caractérisé en ce que** l'hydrocondenseur (5) est intégré dans l'aérocondenseur (4).

2. Dispositif selon la revendication 1, **caractérisé en ce que** l'hydrococondenseur (5) est intégré dans le plénum (4b) de distribution de vapeur de l'aérocondenseur (4).

## Patentansprüche

1. Vorrichtung zur Verbesserung der Wärmeerzeugung durch Kraftwärmekopplung, mit einer Wärmequelle (SC), die Dampf erzeugt, welcher in einer Turbine (2) entspannt wird, deren Auslass mit einem Luftkondensator (4) verbunden ist, der Wärme abführt, und mit mindestens einem zweiten Hilfskondensator (5) in Form eines Hydrokondensators (5), wobei die Kühlflüssigkeit dieses Hydrokondensators (5) einer Anlage oder einer Ausrüstung (B) zugeführt wird, in welcher ihre Wärme entzogen und genutzt wird, wonach die Flüssigkeit zu dem Hydrokondensator zurückgeleitet wird, **dadurch gekennzeichnet, dass** der Hydrokondensator (5) in dem Luftkondensator (4) integriert ist.

2. Vorrichtung nach Anspruch 1, **dadurch gekennzeichnet, dass** der Hydrokondensator (5) in der Dampfverteilerkammer (4b) des Luftkondensators (4) integriert ist.

## Claims

1. A device for improving the production of heat by cogeneration comprising a heat source (SC) producing steam which is expanded in a turbine (2), the exhaust of which is linked to an air condenser (4) which evacuates the heat, and comprising at least one second auxiliary condenser (5) in the form of a hydrocondenser, the coolant of this hydrocondenser (5) being directed toward an installation or equipment (B) in which its heat is extracted and used, then the liquid is returned to the hydrocondenser, **characterized in that** the hydrocondenser (5) is incorporated in the air condenser (4).

2. The device as claimed in claim 1, **characterized in that** the hydrocondenser (5) is incorporated in the steam distribution chamber (4b) of the air condenser (4).
